# NEW EUROPEAN PATENT SPECIFICATION

(11) **EP 1 211 503 B2**
(45) Date of publication and mention of the opposition decision: **02.12.2015**
(45) Mention of the grant of the patent: 06.09.2006
(21) Application number: 00204323.0
(22) Date of filing: 04.12.2000
(51) Int. Cl.: G01N 21/87

(54) **A method and apparatus for locating inclusions in a diamond stone**
Verfahren und Vorrichtung zur Ortung von Einschlüssen in einem Diamantstein
Procédé et dispositif pour la localisation d'inclusions dans une pierre de diamant

(43) Date of publication of application: 05.06.2002
(73) Proprietor: Diamcad, 2018 Antwerp (BE); SivovoLenko, Serguei Borisovish, Moskou (RU)
(72) Inventor: van der Steen, Pol, 2900 Gooreind (BE); Sivovolenko, Serguei Borisovish, Moscow (RU)
(74) Representative: D'Halleweyn, Nele Veerle Trees Gertrudis

(56) References cited:
- WO-A-99/61890
- WO-A1-99/61890
- WO-A1-2009/068354
- WO-A1-2012/004351
- BE-A2- 821 278
- GB-A- 1 416 568
- GB-A- 2 081 439
- GB-A- 2 081 439
- GB-A- 2 096 793
- GB-A- 2 103 355
- IL-A- 87 499
- RU-C- 2 054 656
- RU-C1- 2 054 656
- SU-A- 408 200
- US-A- 1 700 496
- US-A- 4 152 069
- US-A- 4 152 069
- DATABASE WPI Section EI, Week 199646 20 February 1996 (1996-02-20), Derwent Publications Ltd., London, GB; Class S03, AN 463318 PAVLOV A A: "Defect in transparent crystal determination device" -& RU 2 054 656 C (ALTAI KRISTALL PRODN ASSOC) 1 December 1993 (1993-12-01)
- DATABASE WPI Week 199646, Derwent Publications Ltd., London, GB; Class S03, AN 1996-463318 & RU 2 054 656 C1 (ALTAI KRISTALL PRODN ASSOC) 20 February 1996
- Lecture by S. Sivovolenko: 11 December 1997, "Advanced Computer Technologies forProcessing of Rough diamonds" (http://www.octonus.ru/oct/products/pacor/s tandard/pacor.phtml) (relevant passages: page 2; page 3 line 1; page 3 1st picture)
- DUCAN T.: 'Physics: a Textbook for Advanced Level Students', vol. 2, 1987, JOHN MURRAY, LONDON pages 102 - 103
- Statement by Professor R W Smith, Imperial College, London, dated 23.05.2007
- Statement by Mr. M. Gaukroger, OPPO-1, dated 18.05.2007
- English translation of D1
- SU 408200 A1
- English translation of D11
- extract from www.foreverjewelers.com
- Dia-expert User's Guide
- Dia-expert brochure
- File properties of Microsoft Word document "EXPERT. doc"
- V.I. EPIFANOV ET AL.: 'Raw diamonds processing technology', 1987, VYSHAYA SHKOLA PUBLISHING HOUSE, MOSCOW
- English translation of D16
- Declaration of Mr. Zeev Leshem dated 20.08.2006
- Declaration of Mr. Adi Shva dated 20.08.2006
- Information about the Octonus.ru Internet domain name
- Excerpt from Expert 2000 User's Guide (6 pages)
- excerpt from DiaExpert User's Guide (8 pages)
- Statement by Mr. P. Van der Steen
- GB 2 090 712 A which is referred to at page 1 line 58 of D2
- Analysis of Dia-Expert system by Dr. P. J. Ghandhi dated 17.12.2008
- English translation of D21

## Description

The invention relates to a method for localizing inclusions in a diamond, wherein said diamond is fixed on a holder, said diamond on the holder is observed in a direction of observation under a predetermined angle to obtain an image.

The invention further relates to an apparatus, comprising a holder for supporting a diamond, a light source, a scanning means, a computer and a camera or microscope, suitable to carry out this method.

Such a method is known from GB-A-2 081 439. According to this method the inclusion is localized with respect to the outer surface of the diamond by means of a common reference axis, wherein the determination of the shape of the diamond is done by sensing the edges of images obtained at different angular positions of the diamond.

Other methods are used to determine inclusions in diamonds, all of which have the disadvantage that the inclusions are difficult to locate with respect to the outer surface of the diamond. Mostly two-dimensional images of the diamond will be obtained, as e.g. in WO 99 61890 what leads to an inaccurate location of such inclusion.

RU 2054656 describes a system which uses a light source and a camera to localize inclusions in a diamond. The diamond is so orientated that the same inclusion is visible through two different sides. Special software is used to analyse the apparent difference of the inclusion position when placed in different immersion media. A change of the immersion medium may involve replacement of the air by water.

The invention has for its object to avoid above-mentioned disadvantages and to provide an alternative method according to claim 1, and an apparatus according to claim 3.

According to a first embodiment of the invention the method is further distinguished in that, said diamond is fixed on a holder, said diamond on the holder is detected under a predetermined angle to obtain a reference image, further the direction of observation is at least changed one time, to obtain image data for every direction change, wherein the image-data are fed into a computer to calculate a tridimensional image including the or each inclusion with respect thereof.

Once the inclusion is clearly located with respect to the outer surface of the diamond, said diamond can easily be cut through the most optimal plane, calculated by the computer. This optimal plane leads through the inclusion, so when cutting the diamond the inclusion disappears.

Although the viewing direction with respect to the diamond can be carried out by repositioning the scanner and so on, it is according to the invention easier to rotate and/or translate the holder with the diamond with respect to a fixed direction of observation.

Further it is one of the objectives of the invention to introduce a correction factor, related to the refractive index of the diamond material to be taken up in the calculation when the scanning direction is deviating from a direction of observation, perpendicular to the diamond surface.

To easily create a correct location and/or largeness of the inclusion in the diamond, an optical cylinder will be used, the diameter and the detecting direction is used for the calculation by the computer.

According to a further embodiment the inclusion can be localized by using a scanner having focussing means to obtain a depth position along said direction of observation by focusing said inclusion.

The invention will be elucidated by the following description of an embodiment to localize inclusions in the diamond.

In the drawing:
Figure 1 is a perspective view of an scanning-embodiment according to the invention for scanning a diamond upon a holder.
Figure 2 A,B,C,D, indicates the sequential steps of the preferred method according to the invention.

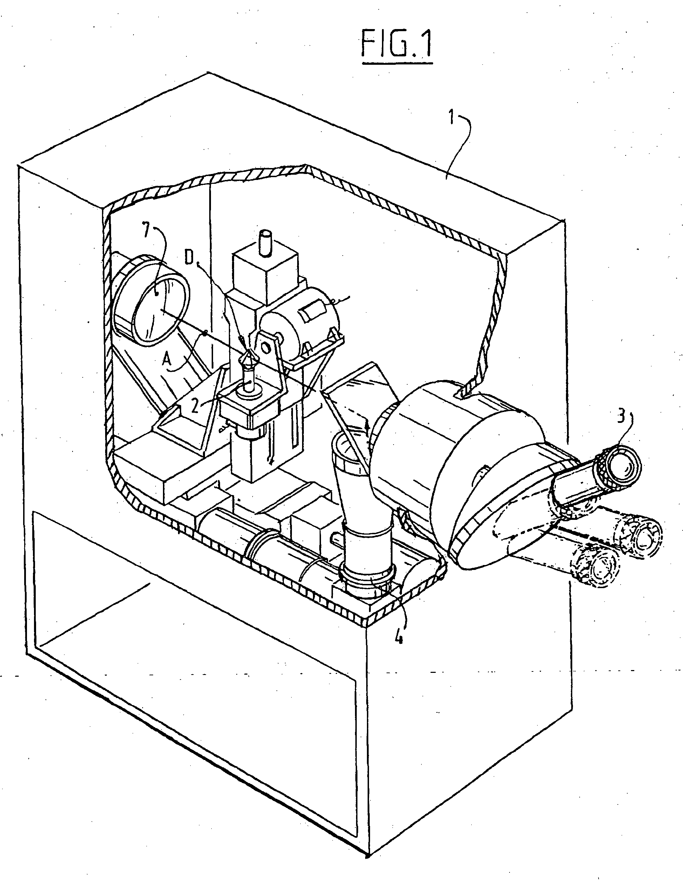

In figure 1 a housing 1 contains a holder 2, upon which a diamond D is fixed. By means of arbitrary and suitable motor means, it is possible to rotate the holder and/or to translate the holder, in order to position the diamond in an optical axis A, being the optical axis of a projecting light-beam 7, projected through the diamond unto a half permeable mirror, refuting in a diamond-image at a microscope and/or camera 3 and to a scanner 4.

When projecting the light it is possible to bring the holder 2 in the correct position with respect to the microscope crosswires in a manual way carried out by an operator. The scanner 4 is used to obtain the data necessary for this particular image and to use this data in a calculation by a computer.

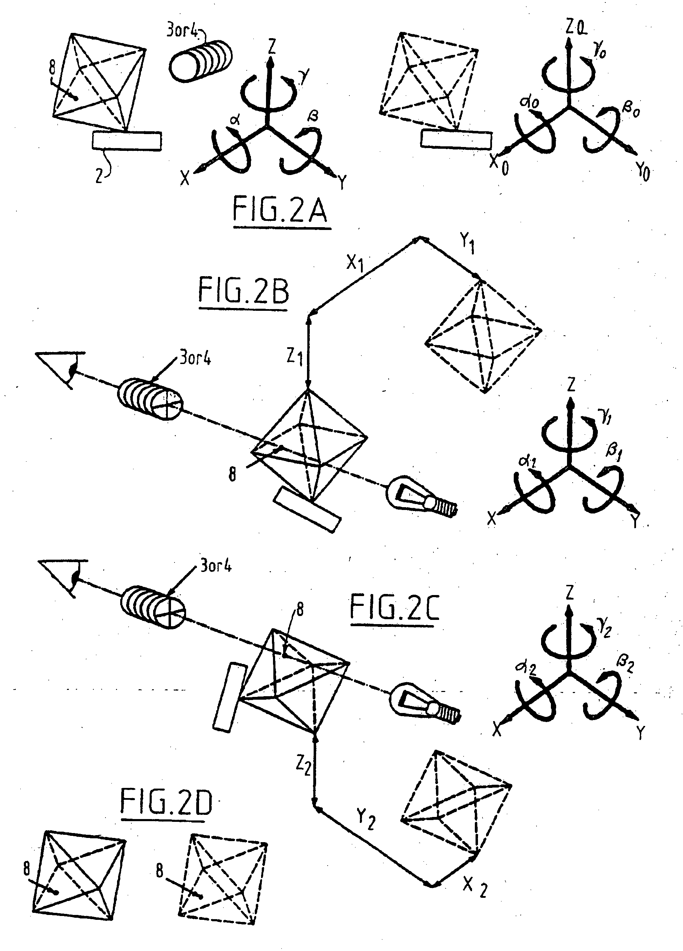

The several steps for carrying out the method according to the invention is explained in figure 2.
a) Fix the diamond on the table, and take a scan of the outer surface of the stone at an arbitrary initial position. The coordinates of this position are X₀,Y₀,Z₀,α₀,β₀,γ₀. i) rotate the stone to make the necessary inclusion visible through the microscope (with the measuring ocular)
b) Move the inclusion in front of the crosswire of the microscope. The operator looking through the microscope does this by controlling the table. The translations X₁, Y₁, Z₁ and rotations α₁, β₁, γ₁ the diamond on the table has performed, starting from its initial position, are registered. A facet is determined (its normal is ( α₁, β₁, γ₁), through which the inclusion is seen. A cylinder is determined so that the inclusion is inside said cylinder. The same procedure (steps a and b) is carried out from several different positions "n".
c) Different positions are understood as either viewing through different facets of the diamond, or viewing through the same facets but from different directions. The different set of translations and rotations are registered: X₂...Xₙ, Y₂...Yₙ, Z₂...Zₙ, α₂...αₙ, β₂...βₙ, γ₂...γₙ.
d) The position of the inclusions inside the diamond is calculated from the registered translations and rotations, the scan of the outer surface and knowledge of the refractive index of the diamond. The position of an inclusion is determined as the nearest cross-centres of the cylinders created on step b. A symbol of the inclusion 8 is projected into the scan.

The invention is not limited to the method according to the lines above. For example the miroscope crosswire may be replaced by a "coordinate map", so avoiding a translation of the holder in each viewing direction.

## Claims

1. A method for localizing inclusions in a diamond (D), wherein said diamond is fixed on a holder (2), **characterized in that**
- a scan is taken of the outer surface of the diamond at an arbitrary initial position (X0, Y0, Z0, α0, β0, γ0);
- the inclusion in the diamond is observed by an operator in at least a first and a different second direction of observation, wherein the translation and rotation for every direction of observation (X1, Y1, Z1, α1, β1, γ1, X2, Y2, Z2, α2, β2, γ2) is registered with reference to the initial position, wherein the registered translations and rotations and the scan of the outer surface are fed in a computer in order to localize the inclusion (8) with respect to the outer surface of said diamond (D) ; and **in that** for a direction of observation deviating from 90° with respect to the diamond surface, a correction factor being a function of the refractive index of the diamond material, is used in the calculation in said computer;
wherein for every direction of observation a cylinder is determined so that the inclusion is in the cylinder, and the inclusion is localized by determining an intersection of the cylinders corresponding with the first and the second direction.

2. A method according to claim 1, **characterized in that** the holder with diamond is rotated and/or translated to obtain a certain observation direction with respect to the diamond.

3. Apparatus comprising a holder for supporting a diamond (D), a light source (7), a scanning means (4) suitable for scanning the outer surface of the diamond, a camera or microscope (3), and a computer adapted to calculate the position of the inclusion inside the diamond, said apparatus being suitable to carry out the method according to any of the preceding claims 1 to 2.

## Patentansprüche

1. Verfahren zur Ortung von Einschlüssen in einem Diamanten (D), wobei der Diamant auf einer Halterung (2) fixiert ist, **dadurch gekennzeichnet, dass**
- ein Scan von der Außenfläche des Diamanten an einer beliebigen Ausgangsposition (X₀,Y₀,Z₀,α₀,β₀,γ₀) aufgenommen wird;
- der Einschluss im Diamanten in zumindest einer ersten und einer anderen, zweiten Beobachtungsrichtung von einem Anwender beobachtet wird, wobei die Translation und Rotation für jede Beobachtungsrichtung (*X*₁, *Y*₁,*Z*₁, α₁,β₁,γ₁,*X*₂, *Y*₂,*Z*₂,α₂,β₂,γ₂) bezüglich der Ausgangsposition registriert werden, wobei die registrierten Translationen und Rotationen sowie der Scan der Außenfläche in einen Computer eingegeben werden, um den Einschluss (8) bezüglich der Außenfläche dieses Diamanten (D) zu orten; und dass für eine von 90° abweichende Beobachtungsrichtung in Bezug auf die Diamantenoberfläche als Korrekturfaktor eine Funktion des Brechungsindexes des Diamantenmaterials in der Berechnung in dem Computer verwendet wird;
wobei für jede Beobachtungsrichtung ein Zylinder derart bestimmt wird, das der Einschluss in dem Zylinder enthalten ist, und der Einschluss geortet wird durch Bestimmung der Überschneidung der entsprechenden Zylinder für die erste und die zweite Richtung.

2. Verfahren gemäß Anspruch 1, **dadurch gekennzeichnet, dass** die Halterung mit Diamant rotiert und/oder versetzt wird, um eine bestimmte Beobachtungsrichtung bezüglich des Diamanten zu erhalten.

3. Vorrichtung, umfassend eine Halterung zum Stützen eines Diamanten (D), eine Lichtquelle (7), ein zum Scannen der Außenfläche des Diamanten geeignetes Scan-Mittel (4), eine Kamera oder ein Mikroskop (3) und einen angepassten Computer, um die Position des Einschlusses im Diamanten zu berechnen, wobei diese Vorrichtung geeignet ist, das Verfahren gemäß einem der vorhergehenden Ansprüche 1 bis 2 auszuführen.

## Revendications

1. Procédé de localisation d'inclusions dans un diamant (D), dans lequel ledit diamant est fixé sur un support (2), **caractérisé en ce que** :
- un balayage de la surface externe du diamant est réalisé à une position initiale arbitraire (X0, Y0, Z0, α0, β0, γ0) ;
- l'inclusion dans le diamant est observée par un opérateur dans au moins une première direction d'observation et une seconde direction d'observation distincte, dans lequel la translation et la rotation pour chaque direction d'observation (X1, Y1, Z1, α1, β1, γ1, X2, Y2, Z2, α1, β2, γ2) sont enregistrées en référence à la position initiale, dans lequel les translations et rotations enregistrées et le balayage de la surface externe sont introduits dans un ordinateur afin de localiser l'inclusion (8) relativement à la surface externe dudit diamant (D) ; et **en ce que**, pour une direction d'observation s'écartant de 90° relativement à la surface de diamant, un facteur de correction, lequel est en fonction de l'indice de réfraction du matériau de diamant, est utilisé dans le cadre du calcul réalisé dans ledit ordinateur ;
dans lequel, pour chaque direction d'observation, un cylindre est déterminé de sorte que l'inclusion se situe dans le cylindre, et l'inclusion est localisée en déterminant une intersection des cylindres correspondant à la première direction et à la seconde direction.

2. Procédé selon la revendication 1, **caractérisé en ce que** le support contenant le diamant est mis en rotation et/ou en translation en vue d'obtenir une certaine direction d'observation relativement au diamant.

3. Appareil comprenant un support destiné à prendre en charge un diamant (D), une source de lumière (7), un moyen de balayage (4) pertinent en vue de balayer la surface externe du diamant, une caméra ou un microscope (3), et un ordinateur apte à calculer la position de l'inclusion à l'intérieur du diamant, ledit appareil étant pertinent en vue de mettre en oeuvre le procédé selon l'une quelconque des revendications précédentes 1 à 2.
